# EUROPEAN PATENT SPECIFICATION

(11) **EP 4 414 313 B1**
(45) Date of publication and mention of the grant of the patent: **21.05.2025**
(21) Application number: 23167667.7
(22) Date of filing: 13.04.2023
(51) Int. Cl.: B66C 19/00, B66C 15/00, H02G 13/00

(54) **GANTRY CRANE COMPRISING LIGHTNING PROTECTION DEVICE, MACHINE AND USE METHOD THEREOF**
PORTALKRAN MIT BLITZSCHUTZVORRICHTUNG, MASCHINE UND VERWENDUNGSVERFAHREN DAFÜR
GRUE À PORTIQUE COMPRENANT UN DISPOSITIF DE PROTECTION CONTRE LA FOUDRE, UNE MACHINE ET UN PROCÉDÉ D'UTILISATION DE CELLE-CI

(30) Priority: 07.02.2023 CN 202310104279
(43) Date of publication of application: 14.08.2024
(73) Proprietor: China Three Gorges Corporation, Wuhan, Hubei 430010 (CN); China Three Gorges Construction Engineering Corporation, Beijing 101199 (CN)
(72) Inventor: TAN, Zhiguo, Wuhan, 430010 (CN); GAO, Peng, Wuhan, 430010 (CN); ZHOU, Shaowu, Wuhan, 430010 (CN); DU, Jianguo, Wuhan, 4300010 (CN); CHEN, Xiang, Wuhan, 430010 (CN); MA, Yukui, Wuhan, 430010 (CN); DING, Xilin, Wuhan, 430010 (CN); XIAO, Xinming, Wuhan, 430010 (CN); CAI, Weijie, Wuhan, 430010 (CN)
(74) Representative: Valet Patent Services Limited

(56) References cited:
- CN-U- 202 449 759
- CN-U- 209 419 204

## Description

### TECHNICAL FIELD

The present invention relates to the technical field of engineering machines, in particular to a gantry crane comprising a lightning protection device, a machine and a use method thereof.

### BACKGROUD

Due to the generally high locations of the engineering gantry cranes, it is easy to cause electrical equipment failure due to lightning strike, which affects the operation of the equipment. If the failure cannot be eliminated in time, it may even cause engineering problems, leading to more serious consequences. Therefore, the lightning protection of the gantry crane is very important, but the current lightning rod lightning protection method has poor protection effect on the electrical equipment of the gantry crane, especially for the induction lightning, the whole surface of the gantry crane can not be covered, and as a result, the protection effect is affected. CN202449759U discloses a gantry crane according to the preamble of claim 1.

### SUMMARY

Therefore, the technical problem to be solved by the present invention is to overcome the drawbacks that the lightning protection method of the gantry crane lightning rod in the prior art can not cover the surface of the gantry crane and affect the protection effect, so as to provide a gantry crane comprising a lightning protection device, a machine and a use method thereof.

In order to solve the above problem, the present invention provides a gantry crane comprising a lightning protection device, wherein the lightning protection device comprises a conductive structure comprising a conductive wire, and the gantry crane has a rail, including:
a rotatable rod structure, including a rotatable rod, wherein the rotatable rod is fitted inside an insulating sleeve at the top of a gantry crane;
an umbrella net structure, including a guide sleeve threadedly and rotatably connected with the rotatable rod in a sleeving manner, wherein the guide sleeve is arranged on an outer circumference of the rotatable rod, at least three conductive longitudinal rods are arranged at intervals in the circumferential direction of the guide sleeve, each of the conductive longitudinal rods has a curved radian, and at least two conductive cross-rings are arranged at intervals and around the conductive longitudinal rods; the radii of the conductive cross-rings are different from each other so that the heights of positions of the conductive cross-rings are also different from each other when the umbrella net structure is unfolded; and
the conductive structure further including a grounding carbon rod, wherein one end of the conductive wire is fixedly connected with a tail end of the rotatable rod, the other end thereof is connected with the grounding carbon rod, and in a lightning protection state, the conductive longitudinal rods extend out of the insulating sleeve, the conductive cross-rings unfold along the circumferential direction of the conductive longitudinal rods into an umbrella shape, and the conductive cross-rings and the conductive longitudinal rods together form an umbrella-shaped structure covering the upper part of the gantry crane, so that the gantry crane is shielded from lightning, wherein lightning is transmitted to the rotatable rod, and then transmitted to the conductive wire by the rotatable rod, and finally transmitted to the ground through the rail by the conductive wire via the grounding carbon rod.

Optionally, longitudinal rod connecting balls are arranged on the conductive longitudinal rods, and the conductive cross-rings are connected with cross-ring connecting circles which are arranged on the conductive longitudinal rods in a sleeving manner.

Optionally, ball diameters of the longitudinal rod connecting balls on the respective conductive longitudinal rods increase sequentially in a direction from the outer side to the guide sleeve, aperture diameters of the cross-ring connecting circles connected on the conductive cross-rings increase sequentially in a direction from the outer side to the guide sleeve, and the aperture diameters of the cross-ring connection circles are smaller than the ball diameters of the longitudinal rod connecting balls arranged in the same layer therewith, and in the lightning protection state, the conductive cross-rings in different layers are hung at positions of different heights on the conductive longitudinal rods.

Optionally, an insulating layer is arranged outside the insulating sleeve, and the insulating sleeve is embedded in the gantry crane.

Optionally, the upper part of the insulating sleeve is funnel-shaped, an inner inclined surface of the funnel-shaped upper part is provided with a connecting plate, an outer ring of the connecting plate is provided with conductive longitudinal rod sliding slot holes to guide and support the conductive longitudinal rods to slide in an extending direction or in a retracting direction, the conductive longitudinal rods pass in or out of the sliding slot holes when the rotatable rod rotates to drive an umbrella net to unfold or contract; an inner circumference of the connecting plate is provided with a support plate to support a control box and a power element, both the support plate and a load bearing plate are made of insulating material, so that a control cabinet, an accumulator and the power element inside the control box, and a casing of the control box are insulated from outside lightning and static electricity; an upper bearing is arranged in a central hole of the support plate and the control box is connected by a charging wire with an electrical control cabinet on a walking trolley of the gantry crane, and the accumulator is configured to be charged by the electrical control cabinet.

Optionally, a hoop is provided at the bottom of the rotatable rod, the hoop is rotatably connected with the rotatable rod by a bearing, the hoop is connected to an inner wall of the insulating sleeve by a bracket, the guide sleeve is arranged on the rotatable rod to move up and down between the connecting plate and the hoop by means of the movement of the rotatable rod.

Optionally, the power element is further included, the power element is connected with the rotatable rod, the power element is connected with the rotatable rod through a flexible coupling made of an insulating material, and the power element is supported on the support plate by a bracket.

A machine includes the above gantry crane comprising a lightning protection device, and the machine further includes walking wheels adapted to carry a gantry crane with an umbrella net structure to move on a rail, the upper surface of part of the rail being provided with an insulating cushion layer.

A use method of the gantry crane comprising a lightning protection device includes the steps of:
in the lightning protection state, making the conductive longitudinal rods extend out of the insulating sleeve, and unfolding the conductive cross-rings along the circumferential direction of the conductive longitudinal rods into an umbrella shape so as to form an umbrella-shaped structure covering the upper part of the gantry crane by the conductive cross-rings and the conductive longitudinal rods, so that the gantry crane is shielded from lightning, wherein lightning is transmitted to the rotatable rod, and then transmitted to the conductive wire by the rotatable rod, and finally transmitted to the ground through a rail by the conductive wire via the grounding carbon rod; and
in a non-lightning protection state, making the conductive longitudinal rods retract into the insulating sleeve, so that the conductive cross-rings contract in the circumferential direction of the conductive longitudinal rods so as to be integrally recovered into the insulating sleeve.

Optionally, the use method includes the steps of:
Step 1: adjustment of the device before use, in non-thunderstorm weather, it is necessary to prepare for lightning protection in thunderstorm weather, connecting a charging wire to an electrical control cabinet on a walking trolley of the gantry crane, charging the accumulator by the electrical control cabinet, and disconnecting the charging wire from the electrical control cabinet after completion of charging to avoid lightning damage to a control box through the charging wire during thunderstorm;
Step 2: lightning protection by displacement of the gantry crane, when thunderstorm weather is imminent, firstly, driving the gantry crane to a part of the rail provided with an insulating cushion layer and then stopping the gantry crane, insulating the walking wheels from the metal rail by the insulating cushion layer, and conducting lightning into the earth through another part of the rail which is in contact with the grounding carbon rod and is not provided with the insulating cushion layer;
Step 3: lightning protection by deployment of an umbrella net, sending an action command to a power element through the gantry crane or a remote wireless control device for the control box, rotating the rotatable rod by the power element, driving the conductive longitudinal rods to extend upwards by the conductive sleeve, and with the extension of the conductive longitudinal rods, making the longitudinal rod connecting balls on the conductive longitudinal rods match the cross-ring connecting circles while being in contact therewith, so that the conductive cross-rings are driven to also move upwards and unfold layer-by-layer, and when the conductive longitudinal rods are fully extended, so that the conductive cross-rings of each layer are unfolded in position, and the umbrella net structure is unfolded and spread over the gantry crane; and
Step 4: equipment operation recovery after the thunderstorm, after the thunderstorm is over, according to a reversed operation opposite to the unfolding of the umbrella net structure, receiving by the power element another action command from the gantry crane or the remote wireless control device, driving the conductive longitudinal rods to retract, thereby driving the conductive cross-rings to retract and then automatically stacking the conductive cross-rings on a connecting plate, so that the gantry crane is able to freely walk on the rail and work.

The technical solution according to the present invention has the following advantages:
1. The gantry crane comprising a lightning protection device provided by the invention includes: a rotatable rod structure, including a rotatable rod, wherein the rotatable rod is fitted inside an insulating sleeve at the top of a gantry crane; an umbrella net structure, including a guide sleeve rotatably connected with the rotatable rod, wherein the guide sleeve is arranged on an outer circumference of the rotatable rod, at least three conductive longitudinal rods are arranged at intervals in the circumferential direction of the guide sleeve, and at least two conductive cross-rings arranged at intervals are fixedly disposed between the adjacent conductive longitudinal rods; the radii of the conductive cross-rings are different from each other so that the heights of positions of the conductive cross-rings are also different from each other when the umbrella net structure is unfolded; and a conductive structure, including a conductive wire and a grounding carbon rod, wherein one end of the conductive wire is fixedly connected with a tail end of the rotatable rod, the other end thereof is connected with the grounding carbon rod, and in a lightning protection state, the conductive longitudinal rods extend out of the insulating sleeve, the conductive cross-rings unfold along the circumferential direction of the conductive longitudinal rods into an umbrella shape, and the conductive cross-rings and the conductive longitudinal rods together form an umbrella-shaped structure covering the upper part of the gantry crane, so that the gantry crane is shielded from lightning, wherein lightning is transmitted to the rotatable rod, and then transmitted to the conductive wire by the rotatable rod, and finally transmitted to the ground through a rail by the conductive wire via the grounding carbon rod. In thunderstorm weather, the conductive longitudinal rods extend out of the insulating sleeve, and the conductive cross-rings unfold the conductive longitudinal rods outward along the circumferential direction so as to form an umbrella-shaped structure covering the upper part of the gantry crane by the conductive cross-rings and the conductive longitudinal rods, so that lightning falling above the gantry crane reaches the umbrella-shaped structure, and then is transmitted to the ground through the conductive wire and the grounding carbon rod, thus solving the problem that the lightning rod cannot cover the gantry crane and having a good protection effect on the gantry crane.
2. For the gantry crane comprising a lightning protection device provided by the present invention, the longitudinal rod connecting balls are arranged on the conductive longitudinal rods, and the conductive cross-rings are connected with cross-ring connecting circles which are arranged on the conductive longitudinal rods in a sleeving manner, so that the conductive cross-rings are connected with the conductive longitudinal rods.
3. For the gantry crane comprising a lightning protection device provided by the present invention, ball diameters of the longitudinal rod connecting balls on the respective conductive longitudinal rods increase sequentially in a direction from the outer side to the guide sleeve, aperture diameters of the cross-ring connecting circles connected on the conductive cross-rings increase sequentially in a direction from the outer side to the guide sleeve, and the aperture diameters of the cross-ring connection circles are smaller than the ball diameters of the longitudinal rod connecting balls arranged in the same layer therewith, and in the lightning protection state, the conductive cross-rings in different layers are hung at positions of different heights on the conductive longitudinal rods for smooth installation.
4. For the gantry crane comprising a lightning protection device provided by the present invention, an insulating layer is arranged outside the insulating sleeve, and the insulating sleeve is embedded in the gantry crane, so that the insulating sleeve is fixed in the gantry crane.
5. For the gantry crane comprising a lightning protection device provided by the present invention, the upper part of the insulating sleeve is funnel-shaped, an inner inclined surface of the funnel-shaped upper part is provided with a connecting plate, an outer ring of the connecting plate is provided with conductive longitudinal rod sliding slot holes to guide and support the conductive longitudinal rods to slide in an extending direction or in a retracting direction, the conductive longitudinal rods pass in or out of the sliding slot holes when the rotatable rod rotates to drive an umbrella net to unfold or contract; an inner circumference of the connecting plate is provided with a support plate to support a control box and a power element, both the support plate and a load bearing plate are made of insulating material, so that a control cabinet, an accumulator and the power element inside the control box, and a casing of the control box are insulated from outside lightning and static electricity, and the support plate and the load bearing plate play an insulating role; an upper bearing is arranged in a central hole of the support plate and the control box is connected by a charging wire with an electrical control cabinet on a walking trolley of the gantry crane, and the accumulator is configured to be charged by the electrical control cabinet for charging connection.
6. For the gantry crane comprising a lightning protection device provided by the present invention, a hoop is provided at the bottom of the rotatable rod, the hoop is rotatably connected with the rotatable rod by a bearing, the hoop is connected to an inner wall of the insulating sleeve by a bracket, the guide sleeve is arranged on the rotatable rod to move up and down between the connecting plate and the hoop by means of the movement of the rotatable rod. The hoop plays a role in fixing the rotatable rod to realize up-and-down movement.
7. For the gantry crane comprising a lightning protection device provided by the present invention, the power element is further included, the power element is connected with the rotatable rod, the power element is connected with the rotatable rod through a flexible coupling made of an insulating material, and the power element is supported on the support plate by a bracket. The power element rotates by driving rotation, and the coupling play a connecting role.
8. The machine provided by the present invention includes the above gantry crane comprising a lightning protection device, and the machine further includes walking wheels adapted to move on a rail, the upper surface of part of the rail being provided with an insulating cushion layer so as to avoid the walking wheels from conducting lightning to the rail.

### BRIEF DESCRIPTION OF THE DRAWINGS

In order to illustrate more clearly the specific embodiments of the present invention or the technical solutions in the prior art, the drawings required for the detailed description or prior art description will now be briefly described, and it will be apparent that the drawings in the following description are some embodiments of the present invention, from which other drawings can be derived without inventive step for a person of ordinary skill in the art.
Fig.1 is a structural schematic diagram of the gantry crane provided in an embodiment of the present invention;
Fig.2 is an enlarged A-direction structural schematic diagram of the gantry crane provided in an embodiment of the present invention;
Fig.3 is an enlarged B-direction structural schematic diagram of the gantry crane provided in an embodiment of the present invention;
Fig.4 is an enlarged C-direction structural schematic diagram of the gantry crane provided in an embodiment of the present invention;
Fig.5 is a structural schematic diagram of the umbrella net structure in the closed state provided in an embodiment of the present invention;
Fig.6 is a schematic diagram showing the connection of the conductive longitudinal rods and the conductive cross-rings provided in an embodiment of the present invention;
Fig.7 is a structural schematic diagram of the support plate provided in an embodiment of the present invention;
Fig.8 is a three-dimensional schematic diagram of the umbrella net of the gantry crane in the unfolded state provided in an embodiment of the present invention;
Fig.9 is a three-dimensional schematic diagram of the umbrella net of the gantry crane in the unfolded state provided in an embodiment of the present invention; and
Fig.10 is a three-dimensional schematic diagram of the umbrella net of the gantry crane in the closed state provided in an embodiment of the present invention.

Description of the reference signs: 1. gantry crane; 2. rotating rod; 3. guide sleeve; 4. conductive upright rod; 5. conductive cross-ring; 6. hoop; 7. flange; 8. control box; 9. accumulator; 10. power element; 11. umbrella net structure; 12. connecting plate; 13. insulating sleeve; 14. conductive wire; 15. grounding carbon rod; 16. machine room; 17. insulating layer; 18. walking wheel; 19. insulating cushion layer; 20. rail; 21. bearing; 22. cross-ring connecting circle; 23. upright rod connecting ball; 24. sliding slot hole; 25. support plate; 26. upper bearing; 27. charging wire; 28. electrical control cabinet; 29. load bearing plate; 30. support rod; 31. control cabinet.

### DETAILED DESCRIPTION

The technical solutions of the present invention will now be clearly and fully described in conjunction with the accompanying drawings. Apparently, the embodiments described below are a part, but not all, of the embodiments of the present invention. Based on the embodiments of the invention, all other embodiments obtained by common technicians in the field on the premise of not making creative labor belong to the range of protection of the invention.

In the description of the invention, it should be noted that, the terms "center," "upper," "lower," "left," "right," "longitudinal," "horizontal," "inner," "outer," and the like indicate an orientation or positional relationship based on the orientation or positional relationship shown in the drawings, it is merely for convenience of description of the invention and simplification of the description, it is not intended to indicate or imply that the devices or elements referred to must have a particular orientation, be constructed and operate in a particular orientation, and therefore cannot be construed as limiting the present invention. Moreover, the terms "first", "second", "third" are used for descriptive purposes only and cannot be construed to indicate or imply relative importance.

Throughout the description of the present invention, it should be noted that the terms "installed", "connected", and "connection" are to be broadly understood, for example, the connection can be fixed connection, removable connection, or integrated connection; the connection can be mechanical connection or electrical connection; the connection can be direct connection, or indirect connection through intermediate media, or the connection can be the internal connection of two components. For those skilled in the art, the specific meaning of the above terms in the invention can be understood in specific circumstances.

Furthermore, the technical features involved in different embodiments of the present invention described below can be combined with each other as long as they do not conflict with each other.

### Embodiment 1

The gantry crane lightning protection device provided by the present invention includes: a rotatable rod structure, including a rotatable rod 2, wherein the rotatable rod 2 is fitted inside an insulating sleeve 13 at the top of a gantry crane 1, and the rotatable rod 2 is of an externally threaded structure; an umbrella net structure 11, including a guide sleeve 3 threadedly and rotatably connected with the rotatable rod 2, wherein the guide sleeve 3 is arranged on an outer circumference of the rotatable rod 2, at least three conductive longitudinal rods 4 are arranged at intervals in the circumferential direction of the guide sleeve 3, and at least two conductive cross-rings 5 are arranged at intervals and around the conductive longitudinal rods 4; the radii of the conductive cross-rings 5 are different from each other so that the working heights of positions of the conductive cross-rings 5 are also different from each other when the umbrella net structure 11 is unfolded; and a conductive structure, including a conductive wire 14 and a grounding carbon rod 15, wherein one end of the conductive wire 14 is fixedly connected with a tail end of the rotatable rod 2, the other end thereof is connected with the grounding carbon rod 15, and in a lightning protection state, the conductive longitudinal rods 4 extend out of the insulating sleeve 13, the conductive cross-rings 5 unfold along the circumferential direction of the conductive longitudinal rods 4 into an umbrella shape, and the conductive cross-rings 5 and the conductive longitudinal rods 4 together form an umbrella-shaped structure covering the upper part of the gantry crane 1, so that the gantry crane 1 is shielded from lightning, wherein lightning is transmitted to the rotatable rod 2, and then transmitted to the conductive wire 14 by the rotatable rod 2, and finally transmitted to the ground through a rail 20 by the conductive wire 14 via the grounding carbon rod 15.

In thunderstorm weather, the conductive longitudinal rods 4 extend out of the insulating sleeve 13, and the conductive cross-rings 5 unfold the conductive longitudinal rods 4 outward along the circumferential direction so as to form an umbrella-shaped structure covering the upper part of the gantry crane 1 by the conductive cross-rings 5 and the conductive longitudinal rods 4, so that lightning falling above or near the gantry crane 1 reaches the umbrella-shaped structure, and then is transmitted to the ground through the rail 20 by the conductive wire 14 via the grounding carbon rod 15, thus solving the problem that the lightning rod cannot cover the gantry crane 1. The lightning protection device is insulated from the structure of the gantry crane 1 and the lightning does not affect the gantry crane 1, thus having a good protection effect on the gantry crane 1.

### Embodiment 2

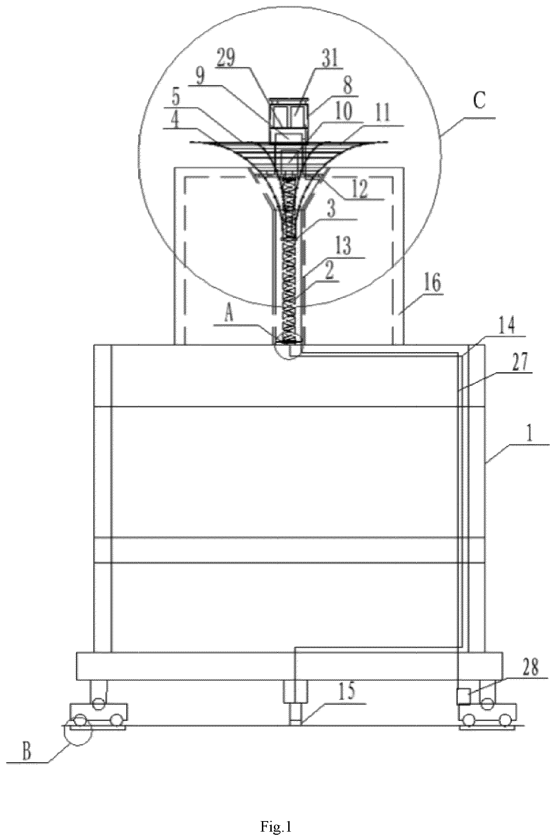

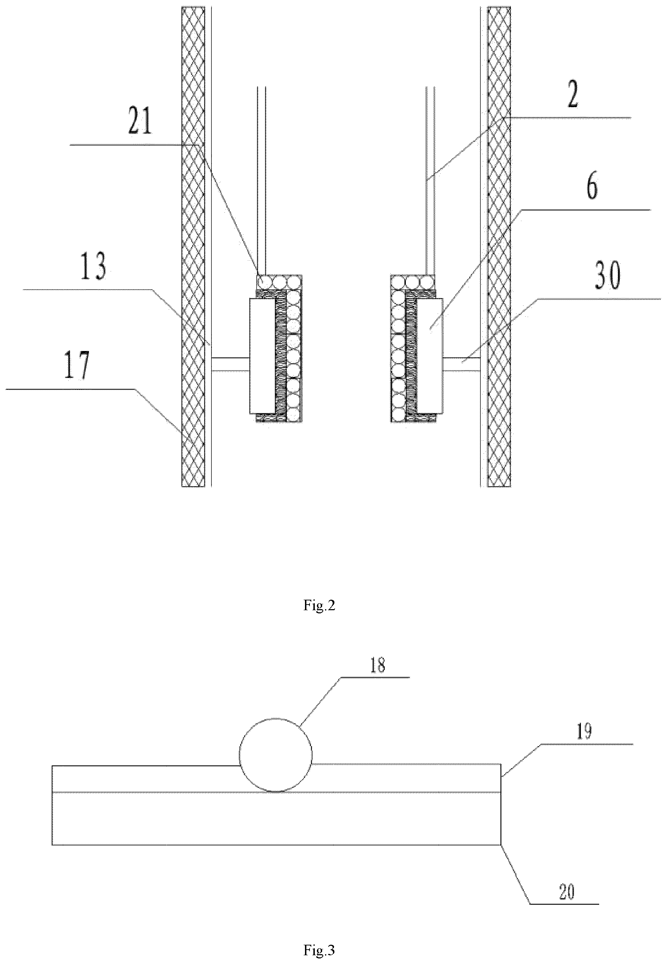

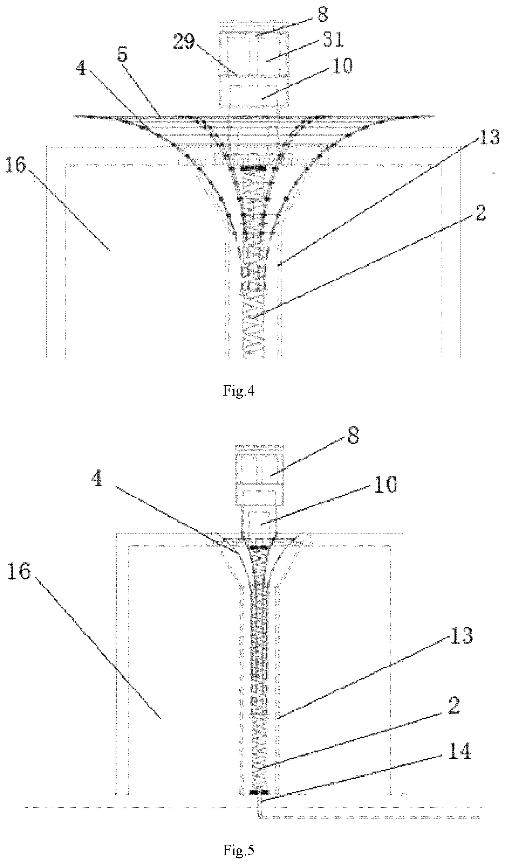

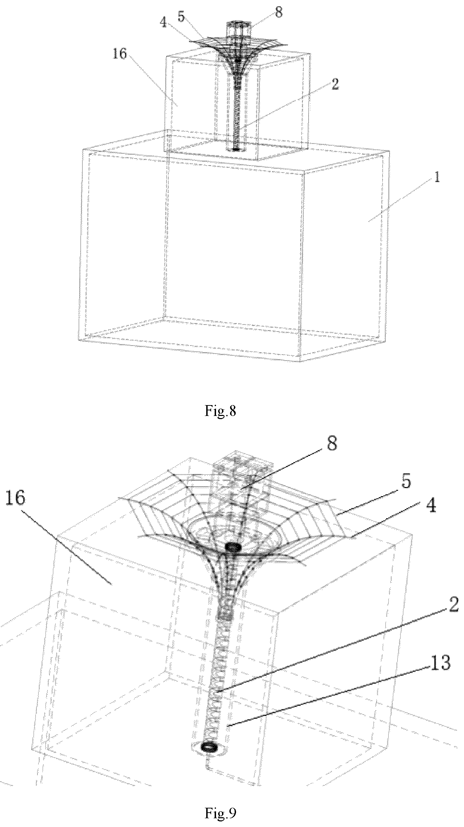

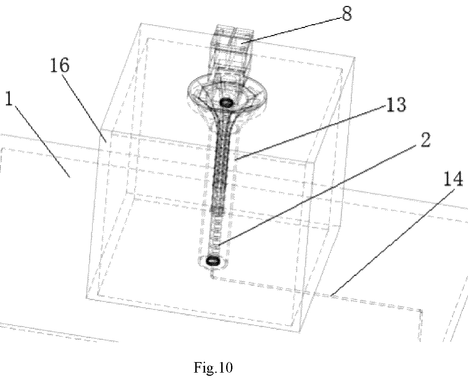

A specific implementation of the gantry crane lightning protection device are shown in Figs. 1-10 the device includes: a rotatable rod structure provided with the rotatable rod 2, an umbrella net structure 11 rotatably connected with the rotatable rod structure, a conductive structure fixedly connected with one end of the rotatable rod structure and a control structure configured to control rotation of the rotatable rod 2.

As shown in Fig.1, the gantry crane lightning protection device is applicable not only to the gantry crane 1, but also to various kinds of equipment and buildings, structures, devices and the like that require lightning protection. Correspondingly, lightning protection devices such as the rotatable rod structures can be arranged on corresponding structures at the top of the equipment and buildings, structures and devices requiring protection. For the case that the lightning protection device is arranged on the gantry crane 1, the rotatable rod structure includes the rotatable rod 2 fitted inside the insulating sleeve 13 at the top machine room 16 of the gantry crane 1. In order to facilitate the rotation of the rotatable rod 2 in a firm support condition, as shown in Fig. 1, the rotatable rod and its matching structure are fixed by at least two points, namely, the upper part is supported by a connecting plate 12 and the lower part is supported by a hoop 6. The upper support way by the connecting plate 12 is as follows: an inner circumference of the connecting plate 12 is embedded with a support plate 25 to support a control box 8 and a power element 10, both the support plate 25 and a load bearing plate 29 are made of insulating material, so that a control cabinet 8, the power element 10 and a casing are insulated from outside lightning and static electricity; the center of the support plate is of a hole structure, an upper bearing 26 is arranged in the hole as the upper support of the rotatable rod 2, and the upper bearing 26 also cooperates with the rotation of the rotatable rod 2. The lower support way by the hoop 6 is as follows: a hoop 6 is provided at the bottom of the insulating sleeve 13, the hoop 6 is rotatably connected with the rotatable rod 2 by a bearing 21, the hoop 6 is connected to an inner wall of the insulating sleeve 13 by a bracket. As the lower support of the rotatable rod 2, the hoop 6 also cooperates with the rotation of the rotatable rod 2. In order to facilitate the access of the umbrella net structure 11, the upper part of the insulating sleeve 13 is tapered, and an inclined surface of the tapered upper part is provided with a connecting plate 12. From the perspective of expanding the scope of application, fixed points can also be added according to the different structural characteristics of the gantry crane or other engineering equipment, which are within the scope of protection of this patent.

As shown in Fig.1, in order to facilitate the extension of the conductive cross-rings 5, the umbrella net structure 11 includes the guide sleeve 3 rotatably connected with the rotatable rod 2, the guide sleeve 3 is arranged on an outer circumference of the rotatable rod 2, the guide sleeve 3 is threadedly connected with the rotatable rod 2, the guide sleeve 3 is arranged on the rotatable rod 2 to move up and down between the connecting plate 12 and the hoop 6 by means of the movement of the rotatable rod 2. A plurality of conductive longitudinal rods 4 are arranged at intervals in the circumferential direction of the guide sleeve 3, each of the conductive longitudinal rods 4 has a curved radian so as to cover the appropriate area after expansion, and a plurality of conductive cross-rings 5 are movably arranged along the length direction of the conductive longitudinal rods 4; the radii of the conductive cross-rings 5 are different from each other, and the farther away from the guide sleeve 3, the larger the diameter. The heights of positions of the conductive cross-rings 5 are also different from each other when the umbrella net structure 11 is unfolded.

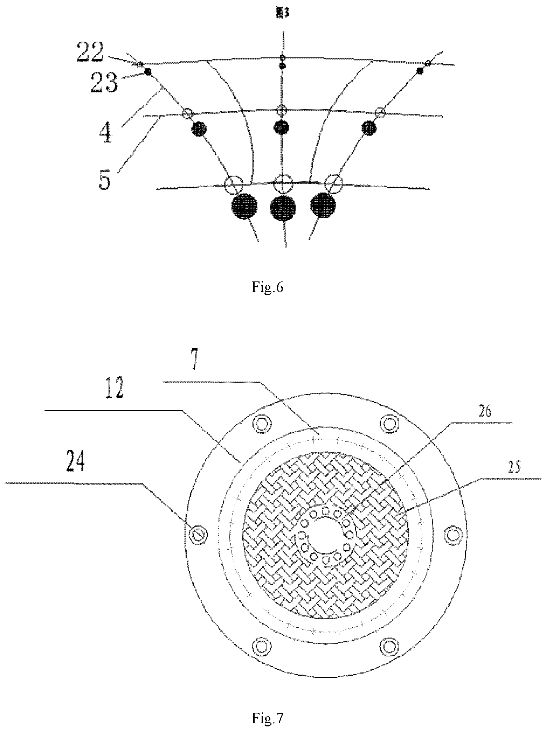

As shown in Fig.6, longitudinal rod connecting balls 23 are arranged on the conductive longitudinal rods 4, and the conductive cross-rings 5 are movably connected with cross-ring connecting circles 22 which are all shaped as an inner-hole ring and are arranged on the conductive longitudinal rods 4 in a sleeving manner. Ball diameters of the longitudinal rod connecting balls 23 on the respective conductive longitudinal rods 4 increase sequentially in a direction from the outer side to the guide sleeve, aperture diameters of the cross-ring connecting circles 22 connected on the conductive cross-rings 5 increase sequentially in a direction from the outer side to the guide sleeve, and the aperture diameters of the cross-ring connection circles 22 are smaller than the ball diameters of the longitudinal rod connecting balls 23 arranged in the same layer therewith, in this way, when the lightning protection umbrella net is unfolded, the conductive cross-rings 5 in different layers are hung at positions of different heights on the conductive longitudinal rods 4 and extend reasonably layer-by-layer. In this manner, when the conductive longitudinal rods 4 extend, the longitudinal rod connecting balls 23 on the outer side can directly pass through the inner holes of the corresponding cross-ring connecting circles 22 due to the small diameters thereof to the cross-ring connecting circles 22 which are lightly smaller in diameter. When the longitudinal rod connecting ball 23 move, the corresponding conductive cross-rings 5 continue to extend outward.

In the lightning protection state, the conductive longitudinal rods 4 extend out of the insulating sleeve 13, and the conductive cross-rings 5 are unfolded along the circumferential direction of the conductive longitudinal rods 4 into an umbrella shape so as to form an umbrella-shaped structure covering the upper part of the gantry crane 1 by the conductive cross-rings 5 and the conductive longitudinal rods 4, so that the gantry crane 1 is shielded from lightning, lightning is transmitted to the rotatable rod 2, and then transmitted to the conductive wire 14 by the rotatable rod 2, and finally transmitted to the ground by the conductive wire 14 via the grounding carbon rod 15.

As shown in Fig.1 to Fig.5, the conductive structure includes the conductive wire 14 and the grounding carbon rod 15, wherein, the conductive wire 14 is arranged along the frame of the gantry crane 1, that is, one end of the conductive wire 14 is fixedly connected with the rotatable rod 2, and the other end is connected with the grounding carbon rod 15 arranged at the bottom of the gantry crane 1.

The upper part of the insulating sleeve 13 is funnel-shaped, an inner inclined surface of the funnel-shaped upper part is provided with a connecting plate 12, an outer ring of the connecting plate 12 is provided with conductive longitudinal rod sliding slot holes 24 to guide and support the conductive longitudinal rods 4 to slide in an extending direction or in a retracting direction, the conductive longitudinal rods 4 pass in or out of the conductive longitudinal rod sliding slot holes 24 when the rotatable rod 2 rotates to drive an umbrella net to unfold or contract; an inner circumference of the connecting plate 12 is embedded with a support plate 25 to support a control box 8 and a power element 10, both the support plate 25 and a load bearing plate 29 are made of insulating material, so that a control cabinet 31, an accumulator 9 and the power element 10 inside the control box 8, and a casing of the control box 8 are insulated from outside lightning and static electricity; the center of the support plate is of a hole structure, and an upper bearing 26 is arranged in the hole as the upper support of the rotatable rod 2, and the upper bearing 26 also cooperates with the rotation of the rotatable rod 2. This ensures that the umbrella net structure 11 is reliably fixed with the gantry crane 1 through the insulating sleeve 13 and the connecting plate 12, and because there is no metal connection or contact between the insulating sleeve 13 and the gantry crane 1, the overall insulation between the umbrella net structure 11 and the body of the gantry crane 1 is ensured, thus ensuring the operation reliability of the device.

As shown in Fig.1 to Fig.5, the control structure is arranged on the top of the machine room 16, and the control structure includes a control box 8. A control cabinet 31, an accumulator 9 and a power element 10 are arranged inside the control box 8 and are configured to control and provide power for the rotation of the rotatable rod 2. The control cabinet 31, the accumulator 9 and a load bearing plate 29 are made of insulating material. The control box 8 is connected by a charging wire 27 with an electrical control cabinet 28 on a walking trolley of the gantry crane, and the accumulator 9 is configured to be charged by the electrical control cabinet 28. The control structure further includes the power element 10 connected with the rotatable rod 2, the power element 10 is connected with the rotatable rod 2 through a flexible coupling made of an insulating material. Specifically, the power element 10 is any kind of motor. The power element 10 is supported on an insulating support plate 25 in the middle by a bracket in the form of a flange 7 or the like. The wireless control mode is preferred to avoid the electrical damage caused by lightning when the cable in the wired mode is struck by lightning.

It should be noted that a housing of the control structure is a protective cover made of metal conductive materials to prevent rain and dust. Inside the control structure, the load bearing plate 29 and the insulating support plate 25 of the control cabinet 31, the accumulator 9 and power element 10 are all made of insulating plastic, insulating rubber, wood and other materials. When the housing of the control structure is subject to lightning or static electricity, because of the insulating effect of the support plate, the internal devices can be guaranteed to operate stably without being damaged by lightning or static electricity.

A machine includes the above gantry crane lightning protection device, and as shown in Fig.1 to Fig.5, the machine further includes walking wheels 18 arranged under the gantry crane 1, and the walking wheels 18 are adapted to carry the gantry crane 1 with the umbrella net structure 11 to move on a rail 20, an appropriate area of the end of the rail 20 is provided with an insulating cushion layer 19, so that the gantry crane 1 can run through the walking wheels 18 to the area with insulating cushion layer 19 to block a lightning conduction channel connecting the gantry crane 1, the walking wheels 18, the rail 20 and the ground, and prevent the lightning from damaging other electrical equipment through the lightning conduction channel. The walking wheels 18 are complementary to the umbrella net structure 11 to further strengthen the lightning protection effect.

In the specific implementation process, the specific use method is as follows:
Step 1: adjustment of the device before use. In non-thunderstorm weather, it is necessary to prepare for lightning protection in thunderstorm weather, the charging wire 27 is connected to the electrical control cabinet 28 on the walking trolley of the gantry crane 1, the accumulator 9 is charged by the electrical control cabinet 28, and the charging wire 27 is disconnected from the electrical control cabinet 28 after completion of charging to avoid lightning damage to electrical elements in the control box 8 through the charging wire 27 during thunderstorm.
Step 2: lightning protection by displacement of the gantry crane. When thunderstorm weather is imminent, firstly, the gantry crane is driven to a part of the rail 20 provided with the insulating cushion layer 19 and then the gantry crane is stopped, the walking wheels 18 are insulated from the metal rail 20 by the insulating cushion layer 19, thereby achieving a preliminary insulating and lightning protection effect. The installation of the insulating cushion layer aims to block the lightning conduction channel connected with the gantry crane structure, the walking wheels, the rail 20, and the grounding grid, etc., so as to avoid damage of the electrical equipment of the gantry crane 1 caused by overcurrent of lightning through the lightning conduction channel under the condition that no lightning conduction device of the equipment body is installed. As mentioned above, the insulating layer 17 is not all laid on the rail terminal. The insulating layer 17 is only laid on the contact section of the walking wheels, and the insulating cushion layer is not laid on the rail section in contact with the grounding carbon rod, so as to play the lightning protection role mentioned above.
Step 3: lightning protection by deployment of an umbrella net. An action command is sent to a power element 10 through the gantry crane or a remote wireless control lightning protection system for the control box 8, the rotatable rod 2 is rotated by the power element 10, the conductive longitudinal rods 4 are driven to move upwards by the conductive sleeve 3 to extend from the conductive longitudinal rod sliding slot holes 24 in the connecting plate 12, and with the extension of the conductive longitudinal rods 4, the longitudinal rod connecting balls 23 on the conductive longitudinal rods 4 are made to match the cross-ring connecting circles 22 while being in contact therewith, so that the conductive cross-rings 5 are driven to also move upwards and unfold layer-by-layer, and when the conductive longitudinal rods 4 are fully extended, so that the conductive cross-rings 5 of each layer are unfolded in position, the conductive cross-rings 5 are unfolded along the circumferential direction of the conductive longitudinal rods 4 and become an umbrella shape, thus forming a regular polygonal umbrella shape covering the equipment to be protected against lightning, and further realizing the lightning protection effect. When the lightning reaches the periphery of the gantry crane 1, the lightning will be received by the umbrella-shaped structure, then transmitted to the rotatable rod 2 by the umbrella-shaped structure, and finally transmitted to the ground through the rail 20 by the conductive wire 14 via the grounding carbon rod 15.
Step 4: equipment operation recovery after the thunderstorm. In order to avoid jitter or breakdown of the lightning protection equipment during operation of the gantry crane or equipment, it is necessary to retract the lightning protection umbrella net after thunderstorm. Retraction of the umbrella net should refer to a reversed operation opposite to the unfolding of the umbrella net, another action command from the gantry crane 1 or the remote wireless control lightning protection system is received by a controller, the power element 10 drives the conductive longitudinal rods 4 to rotate, thereby driving the guide sleeve 3 to move downwards to retract the umbrella structure into the insulating sleeve 13. After the conductive cross-rings 5 are retracted and then automatically stacked on the connecting plate 12, the gantry crane 1 is able to freely walk on the rail 20 and work.

Lightning protection measures for the control system body and operators of this patent: 1. The top control box 8 and the power element 10 of the device of the present invention are externally provided with a protective cover made of an integral metal conductive material, which play a role in preventing rain, moisture and dust for the internal devices. Inside the device, these devices such as the electric control cabinet 28, the accumulator 9 and the power element 10 are provided with the support plate 25 and the load bearing plate 29 which are made of insulating materials such as insulating plastic, insulating rubber and wood, which are the same as those used in the protective cover. On the one hand, the internal devices are reliably fixed, and on the other hand, reliable connection with the guide sleeve 3 is realized so as to ensure the stable operation of the internal mechanism. The power element 10 and the rotatable rod 2 are not directly connected by a metal coupling, and an insulated flexible coupling made of nylon, plastic, rubber or the like is used for insulation. In this way, the control and power system of the device of the present invention can be physically isolated from the external parts that may be struck by lightning. 2. Surge protectors are added inside the control box 8, the electrical control cabinet 28 and the control cabinet 31 of the top control system of the present invention to further slow down surge impact and protect the safety of internal electrical devices when the insulating materials isolated from the outside fail. 3. The opening and closing operation of the device of the present invention is operated by remote control, which ensures the safety of operators. A signal transceiver and control device is set in the control cabinet to ensure the normal realization of the function.

In an alternative embodiment, the umbrella shape may also be other shapes such as a circle.

In an alternative embodiment, the adjacent conductive longitudinal rods 4 have different curved radians.

The invention has the following advantages: (1) The patent is simple and feasible, easy to realize, good in economy, does not affect the normal operation of equipment, has strong universality, and is suitable for popularization; (2) The patent adopts multi-level lightning protection, has high reliability, plays a very good lightning protection effect, and ensures the safety of equipment.

The gantry crane lightning protection device provided in this application solves the following difficulties: (1) In order to avoid vibration damage during the daily operation of the equipment, the lightning protection device must adopt a telescopic mode, which realizes retraction protection in non-thunderstorm weather and unfolding lightning protection in thunderstorm weather; (2) The lightning protection device must be insulated from the whole gantry crane to avoid the damage of the gantry crane; (3) The control system of the lightning protection device adopts reliable internal lightning protection design to ensure the reliability of the control and action of the lightning protection device.

Obviously, the above-described embodiments are merely used for clearly explaining the examples made, and are not limited to the implementation modes. Other variations or alterations in different forms may be made on the basis of the above description for those of ordinary skill in the art. There is no need and cannot be an exhaustive list of all embodiments here. The obvious variations or alterations resulting therefrom are still within the scope of the present invention, which is solely defined by the appended claims.

## Claims

1. A gantry crane comprising a lightning protection device, wherein the lightning protection device comprises a conductive structure comprising a conductive wire (14), and the gantry crane has a rail (20), **characterized in that**, the lightning protection device further comprises:
a rotatable rod structure, comprising a rotatable rod (2), wherein the rotatable rod (2) is fitted inside an insulating sleeve (13) at the top of the gantry crane (1);
an umbrella net structure (11), comprising a guide sleeve (3) threadedly and rotatably connected with the rotatable rod (2) in a sleeving manner, wherein the guide sleeve (3) is arranged on an outer circumference of the rotatable rod (2), at least three conductive longitudinal rods (4) are arranged at intervals in the circumferential direction of the guide sleeve (3), each of the conductive longitudinal rods (4) has a curved radian, and at least two conductive cross-rings (5) are arranged at intervals and around the conductive longitudinal rods (4); the radii of the conductive cross-rings (5) are different from each other so that the heights of positions of the conductive cross-rings (5) are also different from each other when the umbrella net structure (11) is unfolded; and
the conductive structure further comprises a grounding carbon rod (15), wherein one end of the conductive wire (14) is fixedly connected with a tail end of the rotatable rod (2), the other end thereof is connected with the grounding carbon rod (15), and in a lightning protection state, the conductive longitudinal rods (4) extend out of the insulating sleeve (13), the conductive cross-rings (5) unfold along the circumferential direction of the conductive longitudinal rods (4) into an umbrella shape, and the conductive cross-rings (5) and the conductive longitudinal rods (4) together form an umbrella-shaped structure covering the upper part of the gantry crane (1), so that the gantry crane (1) is shielded from lightning, wherein lightning is transmitted to the rotatable rod (2), and then transmitted to the conductive wire (14) by the rotatable rod (2), and finally transmitted to the ground through the rail (20) by the conductive wire (14) via the grounding carbon rod (15).

2. The gantry crane according to claim 1, **characterized in that** longitudinal rod connecting balls (23) are arranged on the conductive longitudinal rods (4), and the conductive cross-rings (5) are connected with cross-ring connecting circles (22) which are arranged on the conductive longitudinal rods (4) in a sleeving manner.

3. The gantry crane according to claim 2, **characterized in that**, ball diameters of the longitudinal rod connecting balls (23) on the respective conductive longitudinal rods (4) increase sequentially in a direction from the outer side to the guide sleeve, aperture diameters of the cross-ring connecting circles (22) connected on the conductive cross-rings (5) increase sequentially in a direction from the outer side to the guide sleeve, and the aperture diameters of the cross-ring connection circles (22) are smaller than the ball diameters of the longitudinal rod connecting balls (23) arranged in the same layer therewith, and in the lightning protection state, the conductive cross-rings (5) in different layers are hung at positions of different heights on the conductive longitudinal rods (4).

4. The gantry crane according to claim 3, **characterized in that** an insulating layer (17) is arranged outside the insulating sleeve (13), and the insulating sleeve (13) is embedded in the gantry crane (1).

5. The gantry crane according to claim 4, **characterized in that** the upper part of the insulating sleeve (13) is funnel-shaped, an inner inclined surface of the funnel-shaped upper part is provided with a connecting plate (12), an outer ring of the connecting plate (12) is provided with conductive longitudinal rod sliding slot holes (24) to guide and support the conductive longitudinal rods (4) to slide in an extending direction or in a retracting direction, the conductive longitudinal rods (4) pass in or out of the sliding slot holes (24) when the rotatable rod (2) rotates to drive an umbrella net to unfold or contract; an inner circumference of the connecting plate (12) is provided with a support plate (25) to support a control box (8) and a power element (10), both the support plate (25) and a load bearing plate (29) are made of insulating material, so that a control cabinet (31), an accumulator (9) and the power element (10) inside the control box (8), and a casing of the control box (8) are insulated from outside lightning and static electricity; an upper bearing (26) is arranged in a central hole of the support plate (25) and the control box (8) is connected by a charging wire (27) with an electrical control cabinet (28) on a walking trolley of the gantry crane, and the accumulator (9) is configured to be charged by the electrical control cabinet (28).

6. The gantry crane according to claim 5, **characterized in that** a hoop (6) is provided at the bottom of the rotatable rod (2), the hoop (6) is rotatably connected with the rotatable rod (2) by a bearing (21), the hoop (6) is connected to an inner wall of the insulating sleeve (13) by a bracket, the guide sleeve (3) is arranged on the rotatable rod (2) to move up and down between the connecting plate (12) and the hoop (6) by means of the movement of the rotatable rod (2).

7. The gantry crane according to claim 6, **characterized by** further comprising the power element (10) connected with the rotatable rod (2), the power element (10) is connected with the rotatable rod (2) through a flexible coupling made of an insulating material, and the power element (10) is supported on the support plate (25) by a bracket.

8. A machine, **characterized by** comprising the gantry crane according to any one of claims 1 to 7, wherein the machine further comprises walking wheels (18) adapted to carry a gantry crane (1) with an umbrella net structure (11) to move on a rail (20), the upper surface of part of the rail (20) being provided with an insulating cushion layer (19).

9. A use method of the gantry crane according to any one of claims 1 to 7, **characterized in** comprising steps of:
in the lightning protection state, making the conductive longitudinal rods (4) extend out of the insulating sleeve (13), and unfolding the conductive cross-rings (5) along the circumferential direction of the conductive longitudinal rods (4) into an umbrella shape so as to form an umbrella-shaped structure covering the upper part of the gantry crane (1) by the conductive cross-rings (5) and the conductive longitudinal rods (4), so that the gantry crane (1) is shielded from lightning, wherein lightning is transmitted to the rotatable rod (2), and then transmitted to the conductive wire (14) by the rotatable rod (2), and finally transmitted to the ground through a rail (20) by the conductive wire (14) via the grounding carbon rod (15); and
in a non-lightning protection state, making the conductive longitudinal rods (4) retract into the insulating sleeve (13), so that the conductive cross-rings (5) contract in the circumferential direction of the conductive longitudinal rods (4) so as to be integrally recovered into the insulating sleeve (13).

10. The use method according to claim 9, **characterized in** comprising steps of:
Step 1: adjustment of the device before use, in non-thunderstorm weather, it is necessary to prepare for lightning protection in thunderstorm weather, connecting a charging wire (27) to an electrical control cabinet (28) on a walking trolley of the gantry crane (1), charging the accumulator (9) by the electrical control cabinet (28), and disconnecting the charging wire (27) from the electrical control cabinet (28) after completion of charging to avoid lightning damage to a control box (8) through the charging wire (27) during thunderstorm;
Step 2: lightning protection by displacement of the gantry crane, when thunderstorm weather is imminent, firstly, driving the gantry crane to a part of the rail provided with an insulating cushion layer (19) and then stopping the gantry crane, insulating the walking wheels (18) from the metal rail (20) by the insulating cushion layer (19), and conducting lightning into the earth through another part of the rail (20) which is in contact with the grounding carbon rod (15) and is not provided with the insulating cushion layer (19);
Step 3: lightning protection by deployment of an umbrella net, sending an action command to a power element (10) through the gantry crane (1) or a remote wireless control device for the control box (8), rotating the rotatable rod (2) by the power element (10), driving the conductive longitudinal rods (4) to extend upwards by the conductive sleeve (3), and with the extension of the conductive longitudinal rods (4), making the longitudinal rod connecting balls (23) on the conductive longitudinal rods (4) match the cross-ring connecting circles (22) while being in contact therewith, so that the conductive cross-rings (5) are driven to also move upwards and unfold layer-by-layer, and when the conductive longitudinal rods (4) are fully extended, so that the conductive cross-rings (5) of each layer are unfolded in position, and the umbrella net structure (11) is unfolded and spread over the gantry crane (1); and
Step 4: equipment operation recovery after the thunderstorm, after the thunderstorm is over, according to a reversed operation opposite to the unfolding of the umbrella net structure (11), receiving by the power element (10) another action command from the gantry crane (1) or the remote wireless control device, driving the conductive longitudinal rods (4) to retract, thereby driving the conductive cross-rings (5) to retract and then automatically stacking the conductive cross-rings (5) on a connecting plate (12), so that the gantry crane (1) is able to freely walk on the rail (20) and work.

## Patentansprüche

1. Ein Portalkran mit einer Blitzschutzeinrichtung, wobei die Blitzschutzeinrichtung eine leitfähige Struktur mit einem leitfähigen Draht (14) aufweist und der Portalkran eine Schiene (20) aufweist,
**dadurch gekennzeichnet, dass** die Blitzschutzvorrichtung ferner: eine drehbare Stangstruktur umfasst, die eine drehbare Stang (2) umfasst, wobei die drehbare Stang (2) in einer Isolierhülse (13) an der Oberseite des Portalkrans (1) montiert ist;
eine Schirmnetzstruktur (11), umfassend eine Führungshülse (3), die mit der drehbaren Stange (2) in hülsenartiger Weise gewindes und drehbar verbunden ist, wobei die Führungshülse (3) an einem Außenumfang der drehbaren Stange (2) angeordnet ist, mindestens drei leitfähige Längsstäbe (4) im Abstand in Umfangsrichtung der Führungshülse (3) angeordnet sind, jede der leitfähigen Längsstäbe (4) einen gekrümmten Radian aufweist und mindestens zwei leitfähige Querringe (5) im Abstand und um die leitfähigen Längsstäbe (4) angeordnet sind; die Radien der leitfähigen Querringe (5) unterscheiden sich voneinander, so dass die Positionshöhen der leitfähigen Querringe (5) auch voneinander unterscheiden, wenn die Schirmnetzstruktur (11) ausgeklappt ist; und
Die leitfähige Struktur umfasst ferner einen Erdungskohlenstab (15), wobei ein Ende des leitfähigen Drahtes(14)fest mit einem Heckende der drehbaren Stange verbunden ist (2), das andere Ende davon mit der Erdungskohlenstange(15) verbunden ist, und in einem Blitzschutzzustand erstrecken sich die leitfähigen Längsstäbe (4) aus der Isolierhülse heraus (13), die leitfähigen Kreuzringe(5) entfalten sich entlang der Umfangsrichtung der leitfähigen Längsstäbe (4) in eine Schirmform und die leitfähigen Kreuzringe (5) und die Blitzableitenstangen (4) bilden zusammen einen Schirm, der den oberen Teil des leitfähigen Drahtes abdeckt, so dass der Kran vom Drehstab übertragen wird, in dem der Drehstab abgedeckt wird (1).

2. Portalkran nach Anspruch 1, **dadurch gekennzeichnet, dass** an den leitfähigen Längsstäben (4) Längsstangenverbindungskugeln (23) angeordnet sind und die leitfähigen Querringe (5) mit an den leitfähigen Längsstäben (4) hülsenförmig angeordneten Querringverbindungskreisen (22) verbunden sind.

3. Portalkran nach Anspruch 2, **dadurch gekennzeichnet, dass** die Kugeldurchmesser der an den jeweiligen leitfähigen Längsstäben (4) angeordneten Querringverbindungskugeln (23) in Richtung von der Außenseite zur Führungshülse aufeinander zunehmen, die Öffnungsdurchmesser der an den leitfähigen Querringen (5) angeschlossenen Querringverbindungskreise (22) in Richtung von der Außenseite zur Führungshülse aufeinander zunehmen und die Öffnungsdurchmesser der Querringverbindungskreise (22) kleiner sind als die in derselben Schicht angeordneten Kugeldurchmesser der mit ihnen angeordneten Querringverbindungskugeln (23) und im Blitzschutzzustand die leitfähigen Querringe (5) in verschiedenen Schichten an Positionen unterschiedlicher Höhe an den leitfähigen Längsstäben (4) aufgehängt werden.

4. Der Portalkran nach Anspruch 3, **dadurch gekennzeichnet, dass** eine Isolierschicht(17)außerhalb der Isolierhülse(13) angeordnet ist und die Isolierhülse(13)in den Portalkran(1) eingebettet ist.

5. Der Portalkran gemäß Anspruch 4, **dadurch gekennzeichnet, dass** der obere Teil der Isolierhülse(13)trichterförmig ist, eine innere geneigte Oberfläche des trichterförmigen Oberteils mit einer Verbindungsplatte(12) versehen ist, ein Außenring der Verbindungsplatte (12)ist mit leitfähigen Längsstab-Schiebeschlitzlöchern versehen (24)um die leitfähigen Längsstabe (4)zu führen und zu stützen, um in eine ausstreckende Richtung oder in eine Rückzugsrichtung zu gleiten, gehen die leitfähigen Längsstabe (4)in oder aus den Schiebeschlitzlöchern (24)wenn die Drehstange (2) rotiert, um einen Regenschirm zu bewegen, um sich zusammenzuziehen; ein innerer Umfang der Verbindungsplatte (12) mit einer Trägerplatte (25) zur Unterstützung eines Steuerkastens (8) und eines Antriebselements (10) versehen ist, wobei sowohl die Trägerplatte (25) als auch eine Tragplatte (29) aus Isoliermaterial bestehen, so dass ein Steuerschrank (31), ein Akkumulator (9) und das Antriebselement (10) im Inneren des Steuerkastens (8) sowie ein Gehäuse des Steuerkastens (8) vor äußerem Blitz und statischer Elektrizität isoliert sind; ein oberes Lager (26) in einem mittleren Loch der Trägerplatte (25) angeordnet ist, und die Steuerbox (8) ist über einen Ladedraht (27) mit einem elektrischen Steuerschrank (28) auf einem Wandwagen des Portalkrans verbunden, und der Akkumulator (9) ist ausgebildet, um durch den elektrischen Steuerschrank (28) geladen zu werden.

6. Der Portalkran gemäß Anspruch 5, **dadurch gekennzeichnet, dass** ein Reifen (6)an der Unterseite der drehbaren Stange (2), der Reifen (6) drehbar mit der drehbaren Stange (2) durch ein Lager (21) verbunden ist, der Reifen (6)ist mit einer Innenwand der Isolierhülse(13) durch eine Halterung verbunden, die Führungshülse (3)ist auf der drehbaren Stange (2) angeordnet, um sich zwischen der Verbindungsplatte(12) und dem Reifen(6) durch die Bewegung der drehbaren Stange (2) auf und ab zu bewegen.

7. Der Portalkran gemäß Anspruch 6, der sich dadurch auszeichnet, dass er das mit der drehbaren Stange (2) verbundene Leistungselement(10) weiter umfaßt, das mit der drehbaren Stange (2) verbundene Leistungselement(10) durch eine flexible Kupplung aus einem Isoliermaterial mit der drehbaren Stange (2) verbunden ist, und das Leistungselement (10) wird auf der Trägerplatte (25) durch eine Halterung gestützt.

8. Maschine, **dadurch gekennzeichnet, dass** sie den Portalkran nach einem der Ansprüche 1 bis 7 umfasst, **dadurch gekennzeichnet, dass** die Maschine ferner Wandräder (18) umfasst, die dazu ausgebildet sind, einen Portalkran (1) mit einer Schirmnetzstruktur (11) zu tragen, um sich auf einer Schiene (20) zu bewegen, wobei die Oberfläche eines Teils der Schiene (20) mit einer isolierenden Kissenschicht (19) versehen ist.

9. Verwendung des Portalkrans nach einem der Ansprüche 1 bis 7, **dadurch gekennzeichnet, dass**:
im Blitzschutzzustand die leitfähigen Längsstäbe (4) aus der Isolationshülse (13) herausragen lassen und die leitfähigen Querringe (5) entlang der Umfangsrichtung der leitfähigen Längsstäbe (4) in eine Regenschirmform ausbreiten, so dass eine Regenschirmförmige Struktur gebildet wird, die den oberen Teil des Portalkrans (1) durch die leitfähigen Querringe (5) und die leitfähigen Längsstäbe (4) abdeckt, so dass der Portalkran (1) vor Blitzen geschützt ist, wobei Blitz auf die drehbare Stäbe (2) übertragen wird, anschließend durch die drehbare Stäbe (2) auf den leitfähigen Draht (14) übertragen wird und schließlich über eine Schiene (20) durch den leitfähigen Draht (14) über den Erdungskohlenstoffstab (15) an den Boden übertragen wird; und
in einem nicht-Blitzschutzzustand, **dadurch gekennzeichnet, dass** sich die leitfähigen Längsstäbe (4) in die Isolationshülse (13) zurückziehen, so dass sich die leitfähigen Querringe (5) in Umfangsrichtung der leitfähigen Längsstäbe (4) zusammenziehen, um einstückig in die Isolationshülse (13) zurückgezogen zu werden.

10. Verwendung nach Anspruch 9, **dadurch gekennzeichnet, dass**:
Schritt 1: Einstellung des Geräts vor dem Gebrauch, bei nicht-Gewitterwetter ist es notwendig, sich auf den Blitzschutz bei Gewitterwetter vorzubereiten, einen Ladedraht (27) an einen elektrischen Steuerschrank (28) auf einem Wandwagen des Portalkrans (1) anzuschließen, den Akkumulator (9) durch den elektrischen Steuerschrank (28) aufzuladen und den Ladedraht (27) nach Abschluss des Ladens vom elektrischen Steuerschrank (28) zu trennen, um Blitzschäden an einem Steuerkasten (8) durch den Ladedraht (27) während eines Gewitters zu vermeiden;
Schritt 2: Blitzschutz durch Verschieben des Portalkrans, wenn ein Gewitterwetter bevorsteht, erstens den Portalkran zu einem Teil der Schiene fahren, der mit einer isolierenden Kissenschicht (19) versehen ist, und dann den Portalkran stoppen, die Gehräder (18) von der Metallschiene (20) durch die isolierende Kissenschicht (19) isolieren und den Blitz durch einen anderen Teil der Schiene (20) in die Erde führen, der mit der Erdungskohlenstoffstange (15) in Kontakt steht und nicht mit der isolierenden Kissenschicht (19) versehen ist;
Schritt 3: Blitzschutz durch Einsatz eines Schirmnetzes, Senden eines Aktionsbefehls an ein Antriebselement (10) durch den Portalkran (1) oder eine drahtlose Fernsteuereinrichtung für die Steuerbox (8), Drehen der drehbaren Stange (2) durch das Antriebselement (10), Antrieb der leitfähigen Längsstangen (4), um sich durch die leitfähige Hülse (3) nach oben zu erstrecken, und mit der Ausdehnung der leitfähigen Längsstangen (4), so dass die Längsstangenverbindungskugeln (23) auf den leitfähigen Längsstangen (4) während in Kontakt mit ihnen mit den Querringverbindungskreisen (22) übereinstimmen, so dass sich die leitfähigen Querringe (5) auch nach oben bewegen und sich Schicht für Schicht entfalten, und wenn die leitfähigen Längsstangen (4) vollständig ausgedehnt sind, so dass die leitfähigen Querringe (5) jeder Schicht in Position entfaltet werden und die Schirmnetzstruktur (11) entfaltet und über den Portalkran (1) ausgebreitet wird;
Und
Schritt 4: Wiederherstellung des Betriebs der Ausrüstung nach dem Gewitter, nach dem Gewitter ist vorbei, gemäß einem umgekehrten Betrieb gegenüber der Entfaltung der Schirmnetzstruktur (11), das vom Antriebselement (10) einen anderen Aktionsbefehl vom Portalkran (1) oder der drahtlosen Fernsteuereinrichtung empfängt, die leitfähigen Längsstäbe (4) zum Rückzug antreibt, wodurch die leitfähigen Querringe (5) zum Rückzug antreibt und anschließend die leitfähigen Querringe (5) automatisch auf eine Verbindungsplatte (12) stapelt, so dass der Portalkran (1) frei auf der Schiene (20) laufen und arbeiten kann.

## Revendications

1. Une grue portique comprenant un dispositif de protection contre la foudre, **caractérisé en ce que** le dispositif de protection contre la foudre comprend une structure conductrice comprenant un fil conducteur (14), et que la grue portique présente un rail (20),
**caractérisé en ce que** le dispositif de protection contre la foudre comprend en outre: une structure de tige rotative, comprenant une tige rotative (2), dans laquelle la tige rotative (2) est montée à l'intérieur d'un manchon isolant (13) en haut de la grue portique (1) ;
une structure de filet parapluie (11), comprenant un manchon de guidage (3) fileté et relié en rotation à la tige rotative (2) de manière manchonnée, **caractérisé en ce que** le manchon de guidage (3) est disposé sur une circonférence extérieure de la tige rotative (2), au moins trois tiges longitudinales conductrices (4) sont disposées à intervalles dans la direction circonférentielle du manchon de guidage (3), chacune des tiges longitudinales conductrices (4) a un radian courbé, et au moins deux anneaux transversaux conducteurs (5) sont disposés à intervalles et autour des tiges longitudinales conductrices (4); les rayons des croix-anneaux conducteurs (5) sont différents les uns des autres de sorte que les hauteurs des positions des croix-anneaux conducteurs (5) sont également différentes les unes des autres lors du déploiement de la structure de filet parapluie (11) ; et
la structure conductrice comprend en outre une tige de carbone de mise à la terre (15), dans laquelle une extrémité du fil conducteur (14) est reliée de manière fixe à une extrémité de queue de la tige rotative (2), son autre extrémité est reliée à la tige de carbone de mise à la terre (15), et dans un état de protection contre la foudre, les tiges longitudinales conductrices (4) s'étendent hors du manchon isolant (13), les bagues transversales conductrices (5) se déploient le long de la direction circonférentielle des tiges longitudinales conductrices (4) en forme de parapluie, et les bagues transversales conductrices (5) et les tiges longitudinales conductrices (4) forment ensemble une structure en forme de parapluie recouvrant la partie supérieure de la grue portique (1), de sorte que la grue portique (1) est protégée contre la foudre, dans laquelle la foudre est transmise à la tige rotative (2), puis transmise au fil conducteur (14) par la tige rotative (2), et finalement transmise au sol par le fil conducteur (14) à travers le rail (20) par l'intermédiaire de la tige de carbone de mise à la terre (15).

2. Grue portique selon la revendication 1, **caractérisée en ce que** des billes de liaison à tiges longitudinales (23) sont disposées sur les tiges longitudinales conductrices (4), et que les anneaux transversaux conducteurs (5) sont reliés à des cercles de liaison transversaux (22) disposés sur les tiges longitudinales conductrices (4) de manière manchonnée.

3. Grue portique selon la revendication 2, **caractérisée en ce que** les diamètres de bille des billes de liaison longitudinales (23) sur les tiges longitudinales conductrices respectives (4) augmentent séquentiellement dans une direction du côté extérieur au manchon de guidage, les diamètres d' ouverture des cercles de liaison transversaux (22) reliés sur les bagues transversales conductrices (5) augmentent séquentiellement dans une direction du côté extérieur au manchon de guidage, et les diamètres d' ouverture des cercles de liaison transversaux (22) sont plus petits que les diamètres de bille des billes de liaison longitudinales (23) disposées dans la même couche avec elles, et dans l'état de protection contre la foudre, les bagues transversales conductrices (5) dans différentes couches sont accrochées à des positions de hauteurs différentes sur les tiges longitudinales conductrices (4).

4. Grue portique selon la revendication 3, **caractérisée en ce qu'**une couche isolante (17) est disposée à l'extérieur du manchon isolant (13), et que le manchon isolant (13) est intégré dans la grue portique (1).

5. Grue portique selon la revendication 4, **caractérisée en ce que** la partie supérieure du manchon isolant (13) est en forme d' entonnoir, une surface inclinée intérieure de la partie supérieure en forme d'entonnoir est pourvue d'une plaque de raccordement (12), une bague extérieure de la plaque de raccordement (12) est pourvue de trous de fente coulissante de tige longitudinale conductrice (24) pour guider et soutenir les tiges longitudinales conductrices (4) pour glisser dans une direction d' extension ou dans une direction de rétraction, les tiges longitudinales conductrices (4) passent dans ou sortent des trous de fente coulissante (24) lorsque la tige rotative (2) tourne pour entraîner un filet parapluie pour se déployer ou se contracter; une circonférence intérieure de la plaque de connexion (12) est pourvue d'une plaque de support (25) pour soutenir une boîte de commande (8) et un élément de puissance (10), la plaque de support (25) et une plaque porteuse (29) étant en matériau isolant, de sorte qu'un armoire de commande (31), un accumulateur (9) et l'élément de puissance (10) à l'intérieur de la boîte de commande (8), ainsi qu'un boîtier de la boîte de commande (8) sont isolés de l'éclairage extérieur et de l'électricité statique; un palier supérieur (26) est disposé dans un trou central de la plaque de support (25) et la boîte de commande (8) est reliée par un fil de charge (27) à un armoire de commande électrique (28) sur un chariot de la grue portique, et l'accumulateur (9) est configuré pour être chargé par l'armoire de commande électrique (28).

6. Grue portique selon la revendication 5, **caractérisée en ce qu'** une bague (6) est prévue au fond de la tige rotative (2), que la bague (6) est reliée en rotation à la tige rotative (2) par un palier (21), que la bague (6) est reliée à une paroi intérieure du manchon isolant (13) par un support, que le manchon de guidage (3) est disposé sur la tige rotative (2) pour se déplacer en haut et en bas entre la plaque de liaison (12) et la bague (6) par le mouvement de la tige rotative (2).

7. Grue portique selon la revendication 6, **caractérisée en ce qu'**elle comprend en outre l'élément de puissance (10) relié à la tige rotative (2), l'élément de puissance (10) est relié à la tige rotative (2) par un accouplement flexible en matériau isolant, et l'élément de puissance (10) est supporté sur la plaque de support (25) par un support.

8. Machine **caractérisée en ce qu** ' elle comprend un portique selon l'une quelconque des revendications 1 à 7, **caractérisée en ce qu'**elle comprend en outre une roue de marche (18) apte à porter un portique (1) à structure parabolique (11) pour se déplacer sur un rail (20) dont la face supérieure d'Une partie (20) est pourvue d'un coussin isolant (19).

9. Procédé d'utilisation de la grue portique selon l'une quelconque des revendications 1 à 7, **caractérisé en ce qu'**il comprend des étapes de:
dans l'état de protection contre la foudre, faire sortir les tiges longitudinales conductrices (4) du manchon isolant (13), et déployer les traverses conductrices (5) le long de la direction circonférentielle des tiges longitudinales conductrices (4) en forme de parapluie de manière à former une structure en forme de parapluie recouvrant la partie supérieure de la grue portique (1) par les traverses conductrices (5) et les tiges longitudinales conductrices (4), de sorte que la grue portique (1) est protégée contre la foudre, dans laquelle la foudre est transmise à la tige rotative (2), puis transmise au fil conducteur (14) par la tige rotative (2), et enfin transmise au sol par un rail (20) par le fil conducteur (14) via la tige de carbone de mise à la terre (15); et
dans un état de protection non éclair, faisant rétracter les tiges longitudinales conductrices (4) dans le manchon isolant (13), de sorte que les anneaux transversaux conducteurs (5) se contractent dans la direction circonférentielle des tiges longitudinales conductrices (4) pour être intégralement récupérés dans le manchon isolant (13).

10. Procédé d'utilisation selon la revendication 9, **caractérisé en ce qu'**il comprend des étapes de:
Etape 1: réglage du dispositif avant utilisation, en cas de tempête, il est nécessaire de se préparer à la protection contre les éclairs en cas de tempête, de connecter un fil de charge (27) à un armoire de commande électrique (28) sur un chariot de la grue portique (1), de charger l'accumulateur (9) par l'armoire de commande électrique (28) et de déconnecter le fil de charge (27) de l'armoire de commande électrique (28) après la fin de la charge pour éviter les dommages de la foudre à une boîte de commande (8) à travers le fil de charge (27) pendant la tempête;
Etape 2: protection contre l'éclair par déplacement de la grue-portique, en cas d'orage imminent, d'abord, conduire la grue-portique vers une partie du rail munie d'une couche de coussin isolant (19) puis arrêter la grue-portique, isoler les roues de marche (18) du rail métallique (20) par la couche de coussin isolant (19), et conduire l'éclair dans la terre à travers une autre partie du rail (20) qui est en contact avec la tige de carbone de mise à la terre (15) et qui n'est pas munie de la couche de coussin isolant (19) ;
Etape 3: protection contre les éclairs par déploiement d'un filet parapluie, envoi d'une commande d'action à un élément de puissance (10) à travers la grue portique (1) ou un dispositif de commande à distance sans fil pour la boîte de commande (8), rotation de la tige rotative (2) par l'élément de puissance (10), entraînement des tiges longitudinales conductrices (4) pour s'étendre vers le haut par le manchon conducteur (3), et avec l'extension des tiges longitudinales conductrices (4), faire correspondre les billes de liaison de tiges longitudinales (23) sur les tiges longitudinales conductrices (4) aux cercles de liaison transversaux (22) en étant en contact avec eux, de sorte que les bagues transversales conductrices (5) sont entraînées pour se déplacer également vers le haut et se déployer couche par couche, et lorsque les tiges longitudinales conductrices (4) sont complètement étendues, de sorte que les bagues transversales conductrices (5) de chaque couche se déploient en position, et la structure du filet parapluie (11) est déployée et étendu et
Etape 4: rétablissement du fonctionnement de l'équipement après l'orage, après la fin de l'orage, selon une opération inversée opposée au déploiement de la structure du filet parapluie (11), recevant par l'élément de puissance (10) une autre commande d'action de la grue-porte (1) ou du dispositif de télécommande sans fil, entraînant le rétractement des tiges longitudinales conductrices (4), entraînant ainsi le rétractement des anneaux transversaux conducteurs (5) puis empilant automatiquement les anneaux transversaux conducteurs (5) sur une plaque de connexion (12), de sorte que la grue-porte (1) puisse marcher librement sur le rail (20) et travailler.
